Europäisches Patentamt

European Patent Office

Office européen des brevets

(11) Veröffentlichungsnummer: **0 444 313 A2**

## EUROPÄISCHE PATENTANMELDUNG

(21) Anmeldenummer: 90125625.5

(22) Anmeldetag: 28.12.90

(51) Int. Cl.5: **F16K 27/02**

(30) Priorität: 24.02.90 DE 4005881
06.06.90 DE 4018147

(43) Veröffentlichungstag der Anmeldung:
**04.09.91 Patentblatt 91/36**

(84) Benannte Vertragsstaaten:
**AT BE CH DE DK ES FR GB GR IT LI LU NL SE**

(71) Anmelder: **Weener Plastik GmbH & Co. KG
Industriestr. 1
W-2952 Weener-Ems(DE)**

(72) Erfinder: **Fudalla, Manfred
Parkstrasse 18
W-2952 Leer(DE)**

(74) Vertreter: **Müller, Enno et al
Rieder & Partner Corneliusstrasse 45
W-5600 Wuppertal 11(DE)**

(54) **Ventilkörper.**

(57) Die Erfindung betrifft einen Ventilkörper (1) für einen Spender, insbesondere einen Spender mit zusammendrückbarem und elastisch rückstellfähigem Behältnis und mit selbstschließenden Füllgutaustritts- und Lufteintrittsventil. Zur Erzielung einer möglichst einfachen Herstellbarkeit und einer gebrauchsvorteilhafteren Ausgestaltung schlägt die Erfindung vor zwei miteinander verbindbare, insbesondere rastverbindbare, eine sich in Ventilkörperlängsrichtung erstreckende Trennebene (T) ausbildende Ventilkörperteile (2, 3), nämlich ein Verschlußteil (3) und ein Spendeöffnungsteil (2) vorzusehen, wobei das Füllgutaustrittsventil von einem Verschlußglied (17), das im Bereich der Trennebene (T) dem Verschlußteil (3) in Ventilkörperlängsrichtung federnd schwingbar angeformt ist zur verschließenden Auflage auf einem dem Spendeöffnungsteil (2) zugeordneten Ventilsitz (29, 41) gebildet ist.

FIG.9

Die Erfindung betrifft einen Ventilkörper für eine Spender, insbesondere einen Spender mit zusammendrückbarem und elastisch rückstellfähigem Behältnis und mit selbstschließenden Füllgutaustritts- und Lufteintrittsventil. Darüber hinaus betrifft die Erfindung eine Kartusche und einen Spender mit einer Kartusche und einem Ventilkörper.

Ein derartiger Spender ist bekannt aus der PCT/CH85/00109, bei dem mittels eines im Behältnis aufgebauten Druckes Füllgut durch ein Saugrohr in einen Ventilkörper gedrückt wird und durch ein Füllgutaustrittsventil aus dem Ventilkörper heraustritt. Der Druck wird bei diesem Spender durch ein Zusammendrücken des elastisch rückstellfähigen Behältnisses erzeugt. Nach dem Zusammendrücken wird das durch das Austrittsventil herausgetretene Füllgutvolumen durch Luft ersetzt, die durch ein Lufteintrittsventil in das Behältnis strömen kann. Bei dieser Lösung ist eine Vielzahl von Bauteilen gegeben und die Montage entsprechend aufwendig.

Ausgehend von diesem Stand der Technik stellt sich der Erfindung die Aufgabe, einen gattungsgemäßen Ventilkörper anzugeben, der bei einfacher Herstellbarkeit gebrauchsvorteilhaft ausgebildet ist.

Diese Aufgabe ist bei dem im Anspruch 1 angegebenen Ventilkörper gelöst durch zwei miteinander verbindbare, insbesondere verrastbare, eine sich in Ventilkörperlängsrichtung erstreckende Trennebene ausbildende Ventilkörperteile, nämlich ein Verschlußteil und ein Spendeöffnungteil, wobei das Füllgutaustrittsventil von einem Verschlußglied gebildet ist, das im Bereich der Trennebene dem Verschlußteil in Ventilkörperlängsrichtung federnd schwingbar angeformt ist zur verschließenden Auflage auf einem dem Spendeöffnungsteil zugeordneten Ventilsitz.

Zufolge derartiger Ausgestaltung ist ein insbesondere spritztechnisch einfach herstellbarer Ventilkörper gegeben. Er besteht lediglich aus zwei zusammensteckbaren Ventilkörperteilen, die zusammen das Füllgutaustrittsventil ausbilden. Dabei ist es vorteilhaft, die Ventilkörperteile, Verschlußteil und Spendeöffnungsteil, einstückig miteinander auszubilden. Die beiden Ventilkörperteile können dann als einzelnes Spritzgußteil hergestellt werden, das dann nur noch zusammengeklappt werden braucht, so daß die Trennebene ausgebildet wird. Vorteilhaft ist weiterhin einem der beiden Ventilkörperteile ein weiteres Verschlußglied anzuformen, das in verschließender Auflage auf einem Ventilsitz eines Lufteintrittsventils liegen kann. Es ist vorgesehen, daß der Ventilsitz des Lufteintrittsventils von dem anderen Ventilkörperteil ausgebildet wird. Auch sind Ausgestaltungen der Erfindung vorgesehen, bei denen der Ventilsitz des Lufteintrittsventils nicht von einem der Ventilkörperteile gebildet wird, sondern von einer Kappe oder dergleichen, in der das Ventilkörperteil Aufnahme findet. Bei einem mit einem erfindungsgemäßen Verschlußteil ausgestatteter Spender wird der Überdruck beispielsweise gleichsam einer Quetschflasche durch Zusammendrücken des Spenderbehälters erzeugt. Bei diesem Pumpvorgang ist durch das selbstverschließende, als Rückschlagventil ausgebildete Lufteintrittsventil ein abgeschlossener Luftraum im Spender ausgebildet, so daß der erforderliche Überdruck beim Pumpvorgang aufgebaut werden kann. Die Anordnung sowohl des Füllgutaustrittsventils als auch des Lufteintrittsventils in einem aus zwei Ventilkörperteilen bestehenden Ventilkörper ist besonders vorteilhaft. Im Ventilkörper sind dann Kanäle ausgebildet, in denen die Luft durch das Lufteintrittsventil bei sich zurückstellendem Behälter einströmen kann. Der einteilig, beispielsweise aus Polypropylen gespritzte Ventilkörper ist weiter bevorzugt langgestreckt ausgebildet, zur Einpassung in einen Spenderhals. Dabei weisen die beiden Ventilkörperteile, Verschlußteil und Spendeöffnungsteil jeweils einen im wesentlichen halbkreisförmigen Querschnitt auf, so daß der Ventilkörper einen kreisförmigen Querschnitt ausbildet. Die Öffnungsebene des Verschlußgliedes des Füllgutaustrittsventils, die mit der Trennebene zwischen dem Spendeöffnungsteil und dem Verschlußteil zusammenfällt, verläuft in etwa parallel zu einer Mittelachse des Spenders. Der Ventilkörper ist geeignet ausgestaltet zur Einpassung in einen Spenderhals, wobei das Spendeöffnungsteil in Zusammenwirkung mit einer Innenwand des Spenderhalses Strömungskanäle ausbildet. Hierzu sind auf der Ventilkörperaußenwand nutenförmige Aussparungen vorgesehen. Diese Strömungskanäle können zur Leitung von Füllgut zur Spendeöffnung dienen aber auch zum Lufteintritt. Sind sowohl Luftkanäle als auch Füllgutkanäle vorgesehen, so sind diese voneinander getrennt. Das Verschlußglied des Füllgutaustrittsventils und/oder des Lufteintrittsventils sind vorzugsweise als federnde Zungen ausgebildet. Insbesondere die federnde Zunge des Lufteintrittsventils kann sich dabei auch quer zur Ventilkörperlängsrichtung erstrecken. Auch ist vorgesehen, das Verschlußglied mit einem Noppen zu versehen, zum Verschluß einer Ventilöffnung. Eine weitere Ausgestaltung der Erfindung sieht ein Verschlußglied vor, bei dem zwei parallel verlaufende am Verschlußteil angeformte Zungen einen im wesentlichen halbkugelförmigen Verschlußkopf tragen, der in einen formangepaßten vom Spendeöffnungsteil ausgebildeten kalottenförmigen Ventilsitz eintreten kann. Auch ist vorgesehen, das Verschlußglied mit einem zweiten Noppen auszugestalten, zum Verschließen der Spenderöffnung des Spendeöffnungsteils. Diese Spenderöffnung kann insbesonde-

re einem Spenderhals zugeordnet sein, in den der Ventilkörper eingepaßt ist. Das Spendeöffnungsteil und das Verschlußteil sind, auch bei einteiliger Ausführung, im Einbauzustand bevorzugt klipsverbunden. Ein als Verschlußzunge ausgestaltetes Verschlußglied ist mit einer eingeprägten Vorspannung in den Verschlußzustand angespritzt. Hierdurch ist in zusammengestecktem Zustand eine Ventilabdichtung gewährleistet. Das als Rückschlagventil ausgestaltete Lufteintrittsventil besteht vorzugweise aus einem flexiblen, streifenförmigen Abschnitt, und bei Ausbildung der Lüftungsöffnung in dem Verschlußteil ist an dem Spendeöffnungsteil ein Ventilsitz angeformt. An diesem Ventilsitz ist das flexible Streifenteil im Verschlußzustand unter Vorspannung in Anlage. Bevorzugt ist vorgesehen, daß das Spendeöffnungsteil und/oder das Verschlußteil einendig einen Halterungssitz für ein Saugrohr ausbilden und daß der Halterungssitz an den Strömungsweg für das Füllgut, bei dem es sich vorzugsweise um ein Fluid handelt, angeschlossen ist. Ein solches Saugrohr ist insbesondere von Bedeutung, wenn der Spender mit Flüssigkeit gefüllt ist. Der Ventilkörper bildet also unmittelbar eine Halterung für das Saugrohr aus. Die Mittelachse des Halterungssitzes verläuft bevorzugt parallel zu der Trennebene zwischen dem Verschlußteil und dem Spendeöffnungsteil. Der Halterungssitz ist entsprechend einendig an den zusammengeklappten Ventilkörper ausgeformt. Bei einer Aufklappung des Ventilkörpers, wie er im Spritzzustand vorliegt, befindet sich die Halterungsöffnung bzw. die Ausformungen, die anschließend die Halterungsöffnung bilden, entsprechend mittig zwischen den beiden Teilen, zwischen dem Spendeöffnungsteil und dem Verschlußteil. Weiter bevorzugt ist der Ventilkörper derart ausgestaltet, daß eine Querschnittsfläche in zusammengeklapptem Zustand des Ventilkörpers im wesentlichen kreisförmig ist. Hierbei auch zunächst unabhängig von der Lage der Querschnittsfläche. Die beiden Ventilkörperteile sind vorzugsweise durch Filmscharniere verbunden. Gemäß einer bevorzugten Ausgestaltung der Erfindung ist das Verschlußglied von Füllgutaustrittsventil und/oder Lufteintrittsventil mit einem als Materialverdünnung ausgestalteten Federgelenk mit dem Ventilkörperteil verbunden. Durch diese Materialverdünnung kann trotz starrer Ausführung des Verschlußgliedes eine geringe, ausreichende Rückstellkraft erzielt werden. Bei einer Ausgestaltung des Ventilkörpers, bei der das Füllgutaustrittsventil einen halbkugelförmigen Ventilkopf aufweist, der in einem kalottenförmig gestalteten Ventilsitz einliegt, weist der Ventilsitz zusätzlich zu einer ersten Füllgutaustrittsöffnung noch eine zweite Spendeöffnung auf, die beide durch den halbkugelförmigen Verschlußkopf verschließbar sind. Beim Spenden fließt das Füllgut nacheinander durch beide Öffnungen. Eine weitere spezielle Ausgestaltung der Erfindung sieht parallel verlaufende nutenförmige Aussparungen in der Ventilkörperaußenwand vor, zur Ausbildung je eines Kanales für den Füllgutfluß und den Luftfluß. Auch ist vorgesehen, den Kanal für den Füllgutfluß doppelt auszugestalten, wobei er beidseitig vom Luftflußkanal angeordnet sein kann. Weiter ist vorgesehen, daß die vorzugsweise durch eine Rastzapfenverbindung zusammengefügten Ventilkörperteile zumindestens einen Querkanal insbesondere zur Luftführung aufweisen. Um eine dichtende Verbindung mit dem Spenderbehälter zu erzielen, weist der Ventilkörper einen Halterungssitz auf, mit dem er im Hals des Spenderbehältnisses formschlüssig eingesteckt ist. Eine spezielle Ausgestaltung sieht hierbei vor, daß der Ventilkörper mit einem Halterungssitz in einen Hals eines Adapters formschlüssig einsitzt, welcher wiederum in einem Hals des Behältnisses einsitzt derart, daß zwischen Adapterhals und Behälterhals ein Freiraum besteht, in welchem Luftschlitze münden, die das Belüften der Flasche ermöglichen. Bei einer speziellen Ausgestaltung des Ventilkörpers, bei dem die beiden Ventilkörperteile mittels Filmscharnier am Halterungssitz verbunden sind, weist ein Ventilkörperteil ein als Zunge ausgestaltetes Verschlußglied des Lufteintrittsventiles auf, das sich quer zur Ventilkörperlängsrichtung erstreckt und die Trennebene schneidet. Das andere Ventilkörperteil weist eine der Spitze der Zunge zugeordnete Auflaufkurve auf, die derart ausgebildet ist, daß beim Zusammenklappen der beiden Ventilkörperteile die Zungenspitze auf die Fläche der Auflaufkerbe trifft, wobei sie in eine vorgespannte Lage geschwenkt wird.

Der zuvor beschriebene Ventilkörper ist insbesondere gedacht für eine Verwendung in einem Spender mit einer Nachfüllkartusche. Hierbei ist bevorzugt die Kartusche als kollabierfähiger Kartuschenbeutel ausgebildet. Der Kartuschenbeutel wird durch Ausdrücken geleert. In diesem Zusammenhang sieht die Erfindung auch vor, daß der Kartuschenbeutel in einem Kartuschenbehälter aufgenommen ist und daß in einem Deckenbereich und in einem Bodenbereich der Einheit Kartuschenbehälter/Kartuschenbeutel eine (Lüftungs-) Durchtrittsöffnung ausgebildet ist. Die Einheit Kartuschenbehälter/Kartuschenbeutel besitzt also zwei Lüftungsdurchtrittsöffnungen. Dies ermöglicht es, den Kartuschenbehälter umlaufend dichtend in dem Spender aufzunehmen, wobei oberhalb und unterhalb des Dichtbereiches eine Entlüftungsöffnung gegeben ist. Durch die obere Durchtrittsöffnung kann sodann Luft beispielsweise von außerhalb des Spenders nachgesaugt werden. Hierbei ist weiter bevorzugt, daß die obere Lüftungsöffnung in einem oberen, im wesentlichen starren Abschlußteil des Kartuschenbeutels ausgebildet ist. Auf diesen Kartuschenbeutel kann umfangsrandseitig eine Dichtkante des Spenderoberteiles umlaufend einwirken (im zusammengebauten Zustand).

Nachstehend ist die Erfindung desweiteren im einzelnen mit Bezug zu der beigefügten Zeichnung erläutert, die jedoch lediglich Ausführungsbeispiele darstellt. Hierbei zeigt:

Fig. 1 eine Draufsicht auf einen Ventilkörper, aufgeklappt;

Fig. 2 einen Schnitt durch den Gegenstand gemäß Fig. 1, geschnitten entlang der Linie II-II;

Fig. 3 eine Schnittdarstellung gemäß Fig. 2, im geschlossenen Zustand;

Fig. 4 eine Draufsicht auf den Gegenstand gemäß Fig. 3, gesehen in Richtung des Pfeiles a;

Fig. 5 einen Längsschnitt durch einen Spender mit eingebautem Ventilkörper, im Zustand der Luftnachsaugung;

Fig. 5a einen Querschnitt durch den Gegenstand gemäß Fig. 5 entlang der Linie Va-Va;

Fig. 6 einen Längsschnitt entsprechend Fig. 5 , im Ausgabezustand;

Fig. 6a einen Querschnitt durch den Gegenstand gemäß Fig. 6 entlang der Linie VIa-VIa;

Fig. 7 einen Längsschnitt durch einen Spenderkopf mit einem Ventilkörper mit in dem Verschlußteil ausgebildeter Lüftungsöffnung;

Fig. 8 einen Gegenstand gemäß Fig. 7 mit abgewandeltem Spenderkopf;

Fig. 9 eine perspektivische Darstellung des Ventilkörpers, im aufgetrennten Zustand;

Fig. 10a einen Querschnitt durch den Ventilkörper gemäß Fig. 9, geschnitten im Bereich der Verschlußzapfen;

Fig. 10b ein Schnitt durch den Gegenstand gemäß Fig. 9, geschnitten im Bereich der Verschlußzunge,

Fig. 10c ein Schnitt durch den Ventilkörper gemäß Fig. 9, geschnitten im Bereich des Halterungssitzes für das Saugrohr,

Fig. 11 eine Draufsicht auf einen aufgeklappten Ventilkörper einer dritten Ausführungsform,

Fig. 12 einen Schnitt durch den Gegenstand gemäß Fig. 11 entlang der Linie XII-XII,

Fig. 13 eine Schnittdarstellung des Gegenstandes gemäß Fig. 11 in verbundenem Zustand,

Fig. 14 eine perspektivische Darstellung der beiden Ventilkörperteile gemäß der dritten Ausführungsform,

Fig. 15 ein in einen Spender eingesetzten Ventilkörper der dritten Ausführungsform in Spendestellung,

Fig. 16 eine Darstellung gemäß Fig. 15 jedoch in Luftansaugstellung,

Fig. 17 eine Darstellung gemäß Fig. 11 einer vierten Ausführungsform,

Fig. 18 eine Darstellung gemäß Fig. 12 einer vierten Ausführungsform,

Fig. 19 eine Darstellung gemäß Fig. 13 einer vierten Ausführungsform,

Fig. 20 eine perspektivische Darstellung der beiden Ventilkörperteile gemäß der vierten Ausführungsform,

Fig. 21 ein in einen Spenderkopf eingesteckter Ventilkörper der vierten Ausführungsform und

Fig. 22 eine Rückansicht des Spendeöffnungsteils der vierten Ausführungsform.

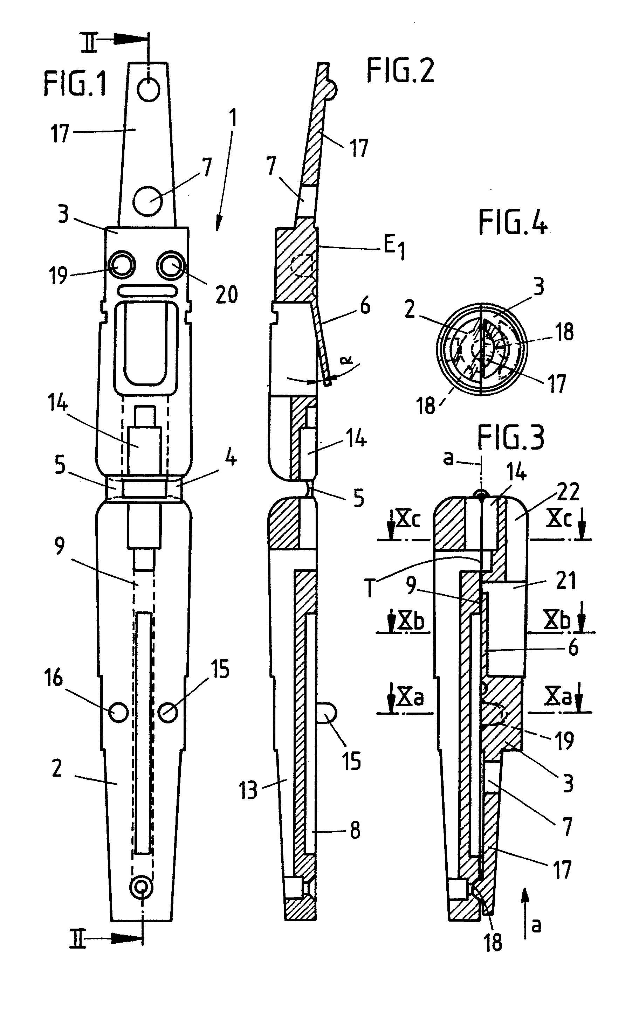

Dargestellt und beschrieben ist - zunächst mit Bezug zu den Fig. 1 - 4 - ein Ventilkörper 1, der insbesondere bei einem Spender, vorzugsweise bei einem Pumpspender, Verwendung finden kann.

In Fig. 1 ist der Ventilkörper im aufgeklappten Zustand dargestellt, wie er auch gespritzt wird. Der Ventilkörper 1 besteht im wesentlichen aus einem Spendeöffnungsteil 2 und einem Verschlußteil 3, die über Filmgelenke 4, 5 miteinander verbunden sind, so daß der Ventilkörper 1 einteilig gespritzt werden kann.

Wie insbesondere Fig. 2 zu entnehmen ist, bildet das Verschlußteil 3 ein Rückschlagventil 6 aus. Dieses dient zum Abschluß eines Lüftungskanals 8. Wie einer Zusammenschau der Figuren 1 - 3 zu entnehmen ist, ist in dem Spendeöffnungsteil 2 eine nutartige Ausnehmung 8 ausgeformt, welche die Lüftungsöffnung 7 mit dem Rückschlagventil 6 verbindet. Damit die Luft und eventuelle Füllgutreste schneller in den Kanal 8 gelangen, ist die Verschlußzunge 17 mit einer Öffnung 7 versehen. Das Rückschlagventil 6 liegt auf einem Ventilsitz 9 auf, der in dem Spendeöffnungsteil 2 ausgebildet ist.

Weiter ist das Rückschlagventil 6, wie Fig. 2 zu entnehmen ist, vorragend bezüglich seines Verschlußzustandes angespritzt, so daß sich im Verschlußzustand (Fig. 3) eine Vorspannung ergibt, mit welcher das Rückschlagventil 6 auf dem Ventilsitz aufliegt. Bei dem Ausführungsbeispiel ist das Rückschlagventil 6 derart angespritzt, daß es bezüglich einer Ebene E1 (die hier mit der Trennebene der beiden Ventilteile 2, 3 zusammenfällt) einen Winkel Alpha von beispielsweise 10° mit dieser einschließt.

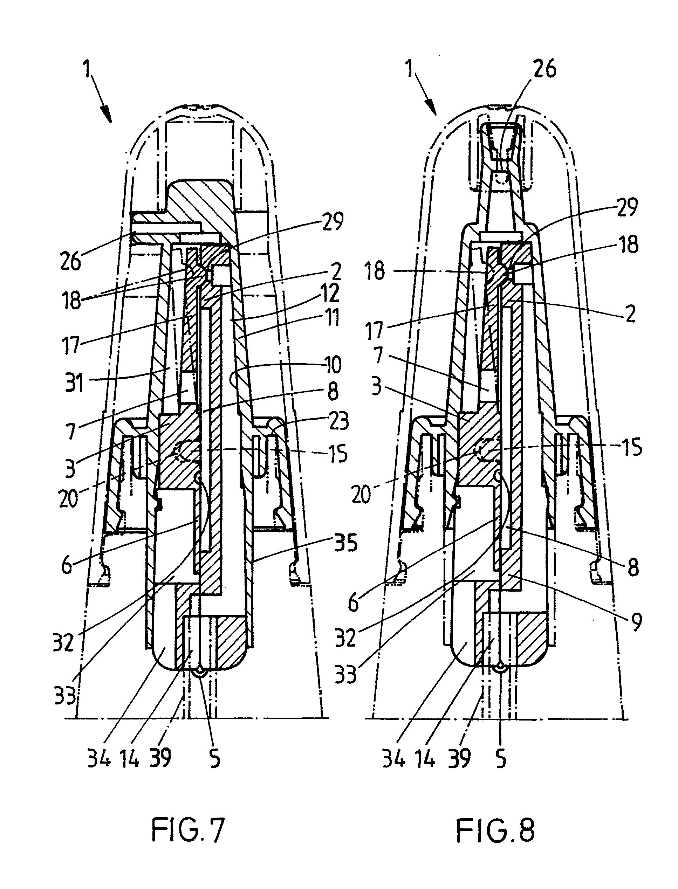

Weiter ist, wie ersichtlich, der Ventilkörper 1 langgestreckt ausgebildet, zur Einpassung in einen Spenderhals, wie dies weiter unten noch in bezug auf die Fig. 7 und 8 beschrieben ist. Die geometrische Ausgangsform des Ventilkörpers ist ein langgestreckter Rundkörper. Dieser ist mittig längsgeteilt, jedoch einendig, über die erwähnten Filmscharniere 4 und 5, verbunden. In der Klappebene bzw. unmittelbar angrenzend an diese) ist der Lüftungsweg und das Rückschlagventil (bei den Ausführungsformen nach den Fig. 1 - 4, 7, 8 und 9) ausgebildet. Das Spendeöffnungsteil bildet hierbei in Zusammenwirkung mit einer Innenwand 10 eines Spenderhalses 11 einen Strömungsweg 12 aus. Hierzu ist in dem Spendeöffnungsteil 2 eine weitere nutförmige Aussparung 13 ausgebildet, gegenüberliegend zu der nutförmigen Aussparung 8. Die nutförmige Aussparung 13 ist im Gegensatz zu der nutförmigen Aussparung 8 im Verschlußzustand zum Spenderinneren hin nicht verschlossen, sondern geht in einen Halterungssitz 14 für ein Saugrohr 15 (vergl. hierzu beispielsweise wieder Fig. 7 und 8) über. Bei dem Ausführungsbeispiel ist in dem Spendeöffnungsteil und dem Verschlußteil 3 jeweils eine halb zylinderschalenförmige Aussparung vorgesehen. Diese Aussparungen münden mittig zwischen den Filmgelenken 4 und 5.

Desweiteren ist das Spendeöffnungsteil 2 und das Verschlußteil 3 mittels Verschlußzapfen 15, 16 im Verschlußzustand rastverbindbar. Eine Verschlußzunge 17 des Verschlußteils 3, in welcher Verschlußzunge die Lüftungsöffnung 7 und ein Verschlußnoppen 18 ausgebildet ist, ist frei schwingbar ausgebildet, mit einer eingeprägten Vorspannung in den Verschlußzustand. Wie insbesondere Fig. 2 zu entnehmen ist, ist hierzu die Verschlußzunge 17, in gleicher Weise wie das Rückschlagventil 6, im Querschnitt winklig zu der Ebene E1 gespritzt, gleichfalls mit einem Winkel Alpha von ca. 8 - 12° beim Ausführungsbeispiel.

Das Rückschlagventil 6 besteht im einzelnen aus einem flexiblen Ventilstreifen.

Zur Aufnahme der erwähnten Rastzapfen 15 und 16, die beidseitig zu der Aussparung 8, etwa mittig zu dieser, angeordnet sind, sind in dem Verschlußteil 3 entsprechende Zapfenaufnahmen 19, 20 vorgesehen, in welche die Verschlußzapfen 15, 16 im Verschlußzustand eingefahren sind.

Entsprechend dem Strömungsweg 12 für aus dem Spender auszubringendes Medium setzt sich auch der Lüftungsweg, der durch das Rückschlagventil 6 unterbrochen ist, zum Spenderinneren hin jenseits des Rückschlagventiles 6 fort. Und zwar in gleicher Weise durch nach außen hin offene Aussparungen 21, 22, die ineinander übergehen. Wiederum in Zusammenwirkung mit der Innenwand 10 des Spenderhalses 11 ergibt sich auch diesbezüglich ein geschlossener Strömungsweg.

Der Draufsicht gemäß Fig. 4 ist die Beweglichkeit der Verschlußzunge 17 zwischen einer Verschlußstellung und einer Öffnungsstellung zu entnehmen.

Eine Mittelachse a des Halterungssitzes 14 verläuft im wesentlichen parallel bzw. fällt beim Ausführungsbeispiel zusammen mit einer Trennebene T zwischen dem Verschlußteil 3 und dem Spendeöffnungsteil 2.

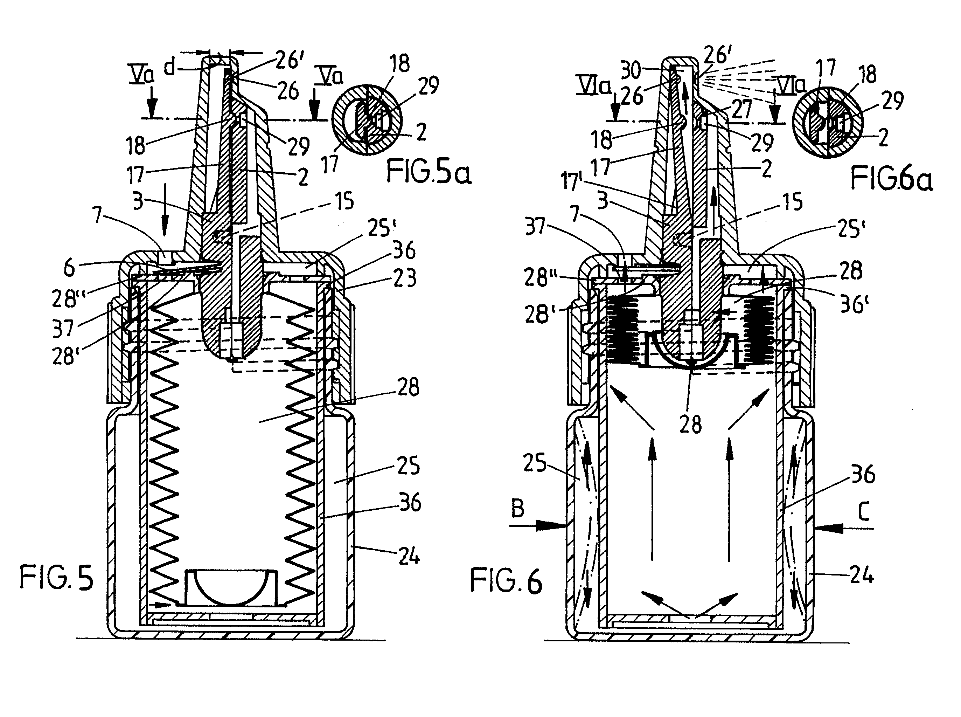

Bei den Ausführungsbeispielen gemäß den Fig. 5 und 6 ist die Lüftungsöffnung 7 in einer Kappe 23 ausgebildet, die zusammen mit einem Gehäuse 24 einen Spender ausformt. Die Lüftungsöffnung 7 ist hier durch das Rückschlagventil 6 abgedeckt, das sich im wesentlichen senkrecht zu der Trennebene T bei den in Rede stehenden Ausführungsbeispielen erstreckt. Entsprechend ist der Lüftungsweg in dem Verschlußteil 3 bzw. in Zusammenwirkung mit dem Spendeöffnungsteil 2 in Fortfall gekommen.

Weiter weist der Ventilkörper 1 gemäß den Ausführungsbeispielen der Fig. 5 und 6 noch einen weiteren Verschlußnoppen 25 auf, der eine Austrittsöffnung 26 in dem Spenderhals 11 von innen verschließt. Der Spenderhals 11 ist im Bereich der Austrittsöffnung 26 und von dort abwärts zum Spenderinneren hin mit einem solch großen inneren Durchmesser d ausgebildet, daß die Verschlußzunge 17 ungehindert zwischen einer Verschlußstellung und einer Spendestellung schwingend sich bewegen kann.

Das kopfseitige Ende des Spendeöffnungsteiles 2 ist mit einer im Querschnitt schräg verlaufenden Fläche 27 ausgebildet, zur Anlage an einem entsprechend verlaufenden Abschnitt der Innenwand 10 des Spenderhalses 11. Die Schräge 27 bewirkt ein beschädigungsfreies Einführen des Verschlußnoppen 25 bei der Montage.

Die Schwingbarkeit der Verschlußzunge 17 ist durch eine deutliche Querschnittsverminderung zwischen einem Bereich, in dem die Rastzapfen 15, 16 und die Rastzapfenaufnahme 19, 20 ausgebildet sind und dem Bereich der Verschlußzunge 17. Zur Versteifung des Überganges ist eine Rippe 17' vorgesehen. Den Fig. 5a und 6a ist eine Schwingbewegung der Verschlußzunge 17 zwischen einer Verschlußstellung und einer Spendestellung zu entnehmen.

Die Funktion der in den Fig. 5 und 6 dargestellten Spender und des darin angeordneten Ventilkörpers 1 ist wie folgt: In Fig. 5 ist der Ansaugzustand nach einer Ausdrückbetätigung dargestellt. Durch die Lüftungsöffnung 7 wird Außenluft angesaugt, die eine Rückstellung des als Quetschflasche ausgebildeten Spendergehäuse 24 nach einer Pumpbetätigung ermöglicht. In Fig. 6 ist der Betätigungszustand angedeutet. Auf das Spendergehäuse 24 wird entsprechend den Pfeilen b und c eine Kraft ausgeübt, die zu einem Zusammenquetschen führt. Hierdurch wird in dem Zwischenraum 25 eine Druckerhöhung erreicht. Dieser Druck wirkt auf die Kartusche 36 und in das Innere der Kartusche 36 durch die Durchtrittsöffnung 27 im Boden der Kartusche. Der Druck pflanzt sich fort auf den Boden 29 der Nachfüllpackung 28 und drückt diesen nach oben. In der Nachfüllpackung 28 beispielsweise befindliches Fluid drückt durch die Durchtrittsöffnung 29 die Verschlußzunge 17 in die Öffnungsstellung und tritt sodann durch den so geschaffenen Spalt 30 durch die Öffnung 26 nach außen. Die Druckerhöhung in dem Raum 25 hat auch zur Folge, daß von innen Druck an dem Rückschlagventil anliegt und so die Lüftungsöffnung 7 verschlossen ist. Es ist sichergestellt, daß die Druckerhöhung zur Ausbringung von Fluid aus dem Spender genutzt wird. Zwischen dem Raum 25 und dem Raum 25' ist eine Strömungsverbindung gegeben, die im einzelnen in der Zeichnung nicht dargestellt ist. Wenn das Behältnis 24 druckentlastet wird, stellen sich die flexiblen Wände zurück, und es wird, wie in Fig. 5 dargestellt, wieder Luft von außen nachgesogen, wobei sich gleichzeitig sogleich die Verschlußzunge 17 in den Verschlußzustand gemäß Fig. 5 zurückgestellt hat.

Bei dem Ausführungsbeispiel gemäß Fig. 7 bildet die Kappe 23 einen Spenderhals 11 mit rechtwinklig zu einer senkrechten Achse des Spenders gerichteten Austrittsöffnung 26 aus. Im übrigen ergeben sich im wesentlichen die gleichen Verhältnisse, wie zuvor zu den Ausführungsbeispielen gemäß Fig. 5 und Fig. 6 beschrieben. Hier wird jedoch die Luftnachsaugung durch das Verschlußteil 3 selbst vorgenommen. Nach einer Druckentlastung liegt das Verschlußteil 3 auf der Durchgangsöffnung 29 verschließend auf. Gleichzeitig ist der Luftweg von der Austrittsöffnung 26 nach innen geöffnet. Durch den Strömungskanal 31 zwischen der Innenwand 10 und einer Außenwand des Verschlußteils 3 strömt die Luft im Ansaugzustand weiter durch die Öffnung 7 und den aufgrund der Aussparung 8 gebildeten Strömungsweg 32 zu dem Rückschlagventil 6. Das Rückschlagventil 6 wird durch den Druck angehoben, und die Luft strömt weiter durch die Abschnitte 33 und 35 des in dem Verschlußteil 3 ausgebildeten Strömungsweges in das Innere des Spenders. Die Verschlußklappe 23 formt hierbei einen zylindrischen, unten offenen Mantel 34 aus, der sich soweit erstreckt, daß der Strömungsweg 12 nach außen hin geschlossen ist. Es kann so kein "Kurzschluß" zum Spenderinneren auftreten. Vielmehr muß der Spenderinhalt, also beispielsweise eine Flüssigkeit, den Weg durch das Tauchrohr 39 nehmen. Im übrigen ergibt sich bezüglich der in den Fig. 7 und 8 nur teilweise dargestellten Spender dieselbe Funktion wie bei den zuvor beschriebenen Spendern.

Bei dem Spender gemäß Fig. 8 ist im Unterschied zu dem Spender gemäß Fig. 7 eine in Verlängerung der Strömungswege 12 und 31 nach oben gerichtete Fortführung vorgesehen, so daß sich die Austrittsöffnung 26 etwa im Bereich einer Mittelachse des Spenders befindet bzw. jedenfalls im Bereich einer Mittelachse der Kappe 23.

Die Kartusche 36 besteht im einzelnen aus einem Kartuschenbehälter (durch die Bezugszeichenlinie des Bezugszeichens 36 gekennzeichnet) und der Nachfüllpackung 28 bzw. dem Kartuschenbeutel 28. Der Kartuschenbeutel 28 geht in ein Abschlußteil 28' über, das relativ starr ausgebildet ist. Das Abschlußteil 28' liegt randseitig (28") auf einem umlaufenden Rand 36' des Kartuschenbehälters auf und ist dort mit diesem fest verbunden, beispielsweise verklebt. In dem Abschlußteil 28' ist eine obere Lüftungsöffnung 37 ausgebildet. Es ist jedoch auch denkbar, mehrere als nur eine obere Lüftung 37 vorzusehen. Der Zwischenraum zwischen einer Innenwand des Kartuschenbehälters 36 und einer Außenwand des Kartuschenbeutels 28 ist durch die obere Öffnung 37 und die untere Öffnung 27 be- bzw. entlüftbar.

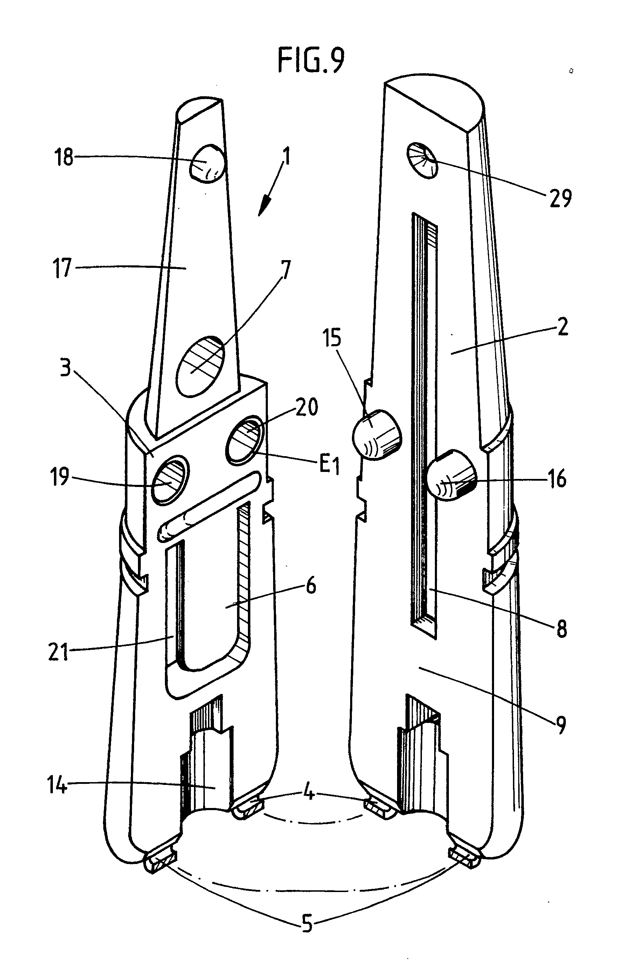

In Fig. 9 ist der Ventilkörper 1 in der Ausführungsform gemäß den Fig. 1 - 4 perspektivisch, im voneinander getrennten Zustand dargestellt. Hinsichtlich der Beschreibung im einzelnen wird auf die obige Beschreibung bezüglich der Figuren 1 - 4 Bezug genommen.

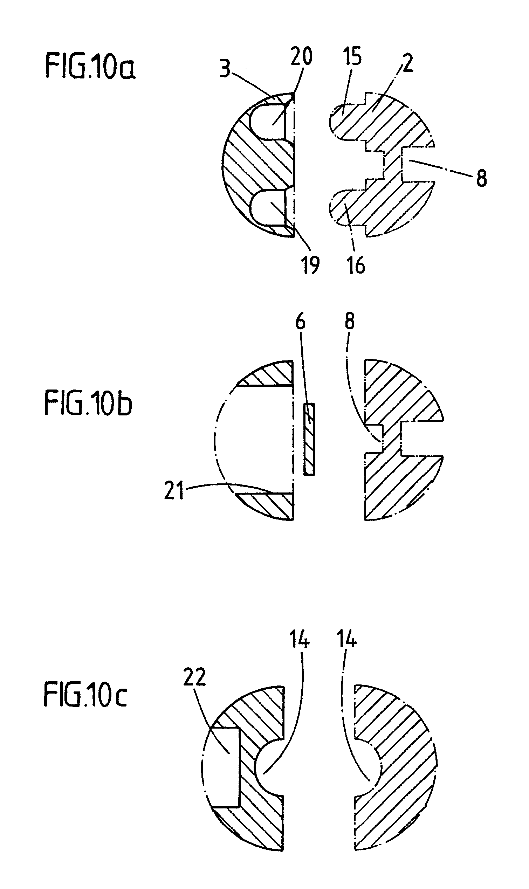

Die Fig. 10 - 10c zeigen verschiedene Querschnittsdarstellungen durch den Ventilkörper 1 gemäß Fig. 9 bzw. gemäß den Fig. 1 - 4. Es ist jeweils der im wesentlichen kreisförmige Aufbau zu erkennen. Das Rückschlagventilteil 6 kann frei zurückweichen in die Aussparung 21.

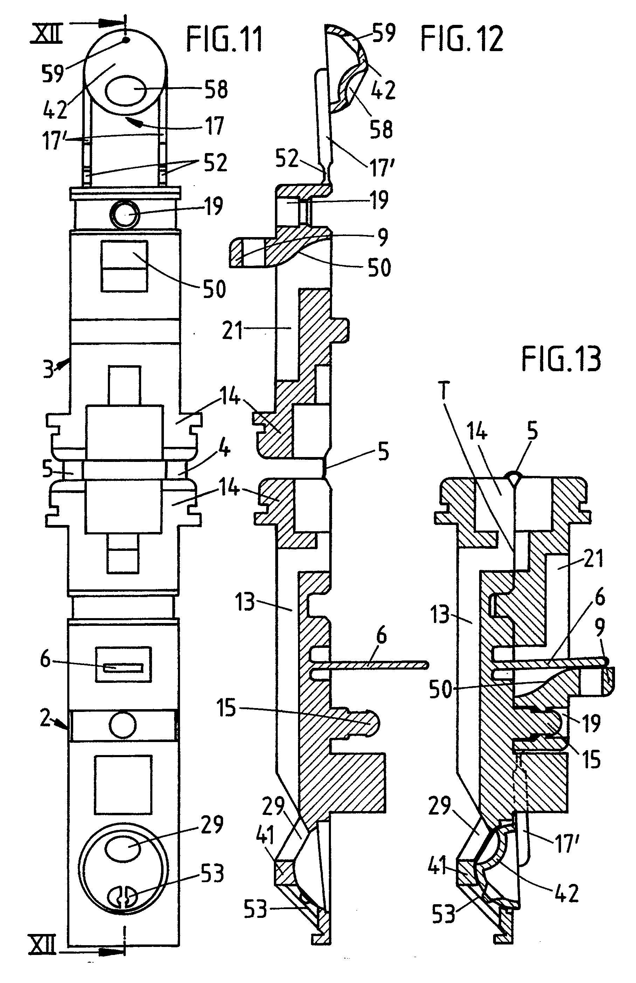

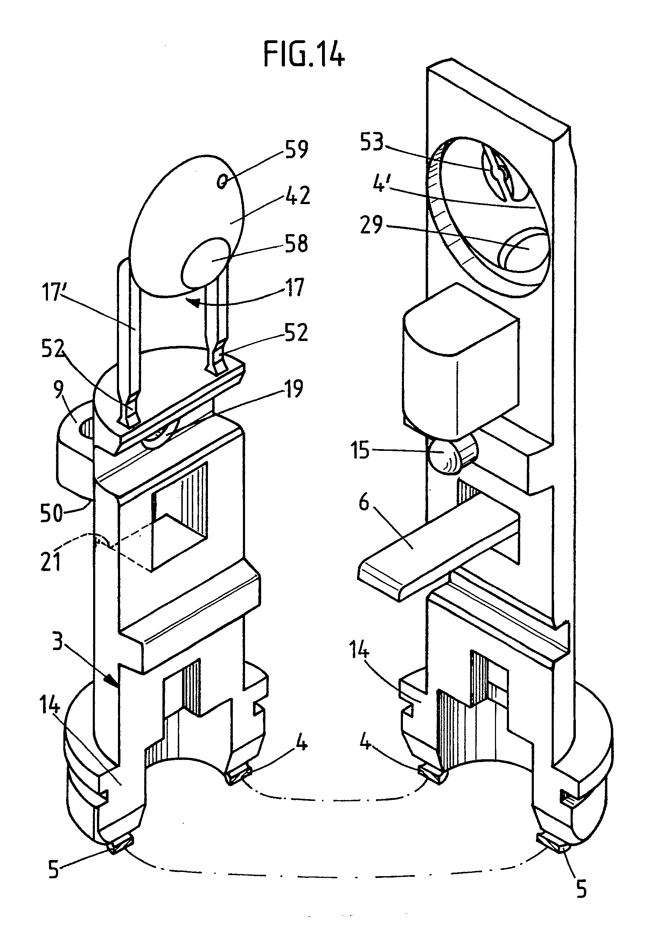

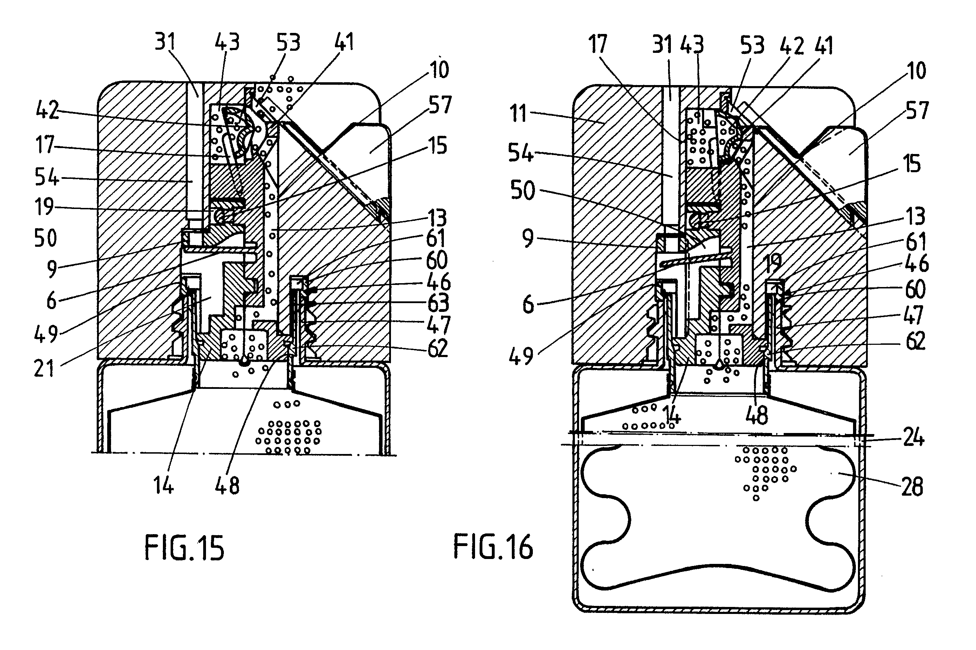

Die Fig. 11 - 16 zeigen eine dritte Ausführungsform des Ventilkörpers. Der aus den beiden Ventilkörperteilen Verschlußteil 3 und Spendeöffnungsteil 2 bestehende Ventilkörper 1 ist in einen Adapterhals 48 eines Adapters 46 einsteckbar, welcher wiederum in dem Behälterhals 47 einsteckt (vgl. Fig. 15 u. 16). Zwischen Adapterhals 48 und Behälterhals 47 ist ein Freiraum, in den Luftschlitze 49 einmünden zur Belüftung des Behälters 24. An den Adapterhals ist ein Kartuschenbeutel 28 befestigt, der sich in einem Spendegehäuse 24 befindet. Der Ventilkörper 1 sitzt in einer den Spenderhals 11 ausbildenden Kappe, die mit einem Schieber 57 verschließbar ist.

Der Ventilkörper besteht aus den beiden zusammensteckbaren Ventilkörperteilen Spendeöffnungsteil 2 und Verschlußteil 3, die mittels Filmscharnieren 4, 5 miteinander einstückig verbunden sind. Das Verschlußteil 3 weist ein Verschlußglied 17 auf, das einen halbkugelförmigen Verschlußkopf 42 aufweist, der mittels zwei Zungen 17' über zwei Federgelenke 52 am Verschlußteil 3 angeformt ist.

Der halbkugelförmige Verschlußkopf 42 sitzt unter Vorspannung in einer Kalotte 41, die den Ventilsitz für das Füllgutaustrittsventil ausbildet. Die Kalotte ist dem Spendeöffnungsteil 2 zugeordnet und weist zwei Öffnungen 29, 53 auf. Die Füllgutaustrittsöffnung 29 schließt sich einer nutenförmigen Aussparung 13 an, die mit der Halsinnenwand 10 -im Einbauzustand- einen Strömungsweg für das Füllgut ausbildet. Die weitere Spendeöffnung 53 bildet den Austrittsweg für das Füllgut aus dem Spenderkopf.

Wird innerhalb des Spendegehäuses 24 ein Druck aufgebaut, so setzt sich dieser durch den Strömungsweg fort und beaufschlagt den Verschlußkopf 42, so daß dieser von der Spendeöffnung 29 bzw. 53 abhebt, wobei die Federgelenke 52 in Wirkung treten. Der Verschlußkopf 42 verlagert sich dabei in eine Kammer 43. Die Volumenänderung die dabei der Kammer 43 aufgezwungen wird, kann durch eine Ausgleichsöffnung 59, die dem die Spendeöffnung 53 verschließenden Teilbereichs des Verschlußkopfes 42 zugeordnet ist, ausgeglichen werden. Der Füllgutaustrittsöffnung 29 zugeordnet weist der halbkugelförmige Verschlußkopf 42 eine Mulde 58 auf. Die Spendeöffnung 53 ist zweiteilig ausgeführt. Die Zweiteiligkeit wird durch einen parallel zur Erstreckungsrichtung die Spendeöffnung 53 trennenden Riegel bewirkt, der in Anlagestellung des Verschlußkopfes 42 in die Kalotte 41 die Ausgleichsöffnung 49 verschließt.

Nach dem Austritt des Füllgutes aus dem Spendegehäuse 24 wird das verdrängte Volumen durch Luft ersetzt. Diese Luft strömt durch den Strömungskanal 31 durch den Spendekopf hindurch und tritt durch einen Ventilsitz 9, der dem Verschlußteil 3 zugeordnet ist, in eine Aussparung 21 ein, die mit den Luftschlitzen 49 des Adapters 46 verbunden ist. Das von dem Ventilsitz 9 und einer dem Spendeöffnungsteil 2 zugeordneten Verschlußzunge 6 gebildete Lufteintrittsventil ragt seitlich aus dem im wesentlichen kreisförmigen Ventilkörper hervor. Die Aussparung 21 bildet zusammen mit der Halsinnenwand 10 des Spendehalses 11 einen Luftkanal aus.

Der Adapter 46 bildet das Verbindungsstück für den Füllgutstrom vom Kartuschenbeutel 28 zum Ventilkörper 1. Der Ventilkörper sitzt dabei in dem Hals 48 des Adapters 46 ein, wobei sich der Ventilkörper 1 mit seinem Halterungssitz 14 auf einer Einsatzpassung 62 des Adapters 46 abstützt. Die Einsatzpassung 62 wird dabei von einem querschnittsgeringeren Bereich des Halses 48 gebildet. Weiterhin ist dem unteren Halsbereich des Adapters 46 der Kartuschenbeutel 28 aufgesteckt. Der Hals 48 des Adapters weist einen geringeren Außendurchmesser auf als der Innendurchmesser des Halses 47 des Behälters 24. Der Freiraum zwischen dem Adapterhals 48 und dem Behältnishals 47 bildet einen Luftkanal zur Belüftung des Behältnisses.

Dem Adapter kommt neben der Ausbildung des Luftkanals noch die Aufgabe zu, den Kartuschenbeutel 28 im Behältnishals 47 zu haltern. Hierzu weist der Adapter einen Kragen 60 auf, dessen Durchmesser größer ist als der Innendurchmesser des Behältnishalses 47, und der auf dem oberen Rand des Behältnishalses 47 aufliegt. Dem Kragen schließt sich halsseitig ein Bund 63 an, dessen Außendurchmesser dem Innendurchmesser des Halses 47 entspricht, so daß der Adapter formschlüssig und zentriert im Hals einsitzt. Der Luftdurchlaß zwischen dem Ventilkörper, hier der Aussparung 21, und dem Behältnis wird von Luftschlitzen 49 gebildet, die dem Bund 63 zugeordnet sind.

Weiterhin steckt der Adapter 46 mit seinem Kragen 60 in einer Aussparung der Kappe 11, wobei dem Kragen 60 eine Ringnut 61 angeformt ist, die die Luftschlitze 49 mit der Aussparung 21 verbinden. Hierdurch ist die Belüftungsverbindung zwischen dem Lufteintrittsventil und dem Behältnisinnenraum gewährleistet.

Es ist ebenfalls vorgesehen, daß der Adapter nicht durch einen Bund 63 im Hals 47 des Behältnisses 24 zentriert wird, sondern das der Adapter 46 mit seinem Kragen 60 in einer ringförmigen Öffnung der Kappe formschlüssig einliegt. Die Kappe kann sich dabei auch teilweise in den Adapterhals 48 hinein erstrecken.

Die Herstellung des Ventilkörpers erfolgt in nicht zusammengeklappter Stellung vorzugsweise durch einen Spritzgußautomaten. Der Automat ist so ausgebildet, daß beim Entformen der Ventilkörperteile diese um die Filmscharniere 4, 5 gebogen werden und in die in Fig. 13 dargestellte Stellung zusammengeklappt werden. Die Spitze der Verschlußzunge 6 läuft dabei auf einer Auslaufkurve 50 des Verschlußteiles auf und kommt so in eine vorgespannte Auflage auf den Ventilsitz 9. Die Verbindung zwischen Spendeöffnungsteil 2 und Verschlußteil 3 wird durch den Rastzapfen 15, der mit einer Zapfenausnehmung 19 verrastet, hergestellt. Der Rastzapfen 15 ist im Querschnitt pilzförmig gestaltet, wobei der pilzförmige Kopf einen gegenüber der Zapfenausnehmung 19 geringfügig größeren Durchmesser aufweist.

Die von den beiden Ventilkörperteilen 2, 3 ausgebildete Trennfläche T dient bei dieser Ausführungsform auch zur Trennung von Füllgutkanälen und Luftkanälen, wobei die Füllgutkanäle dem Spendeöffnungsteil 2 und die Luftkanäle dem Verschlußteil 3 zugeordnet sind.

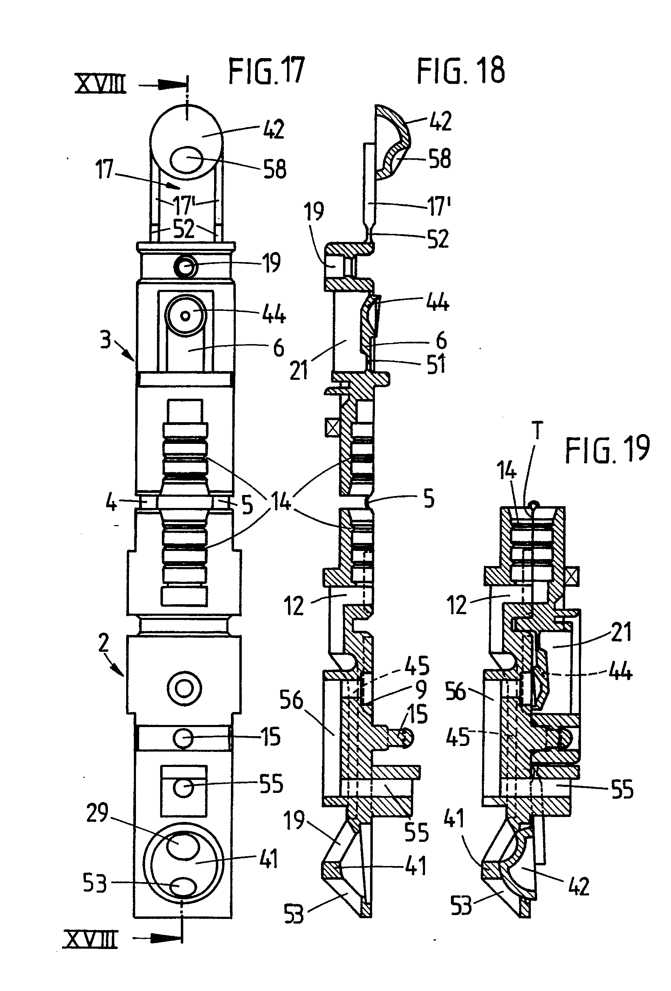

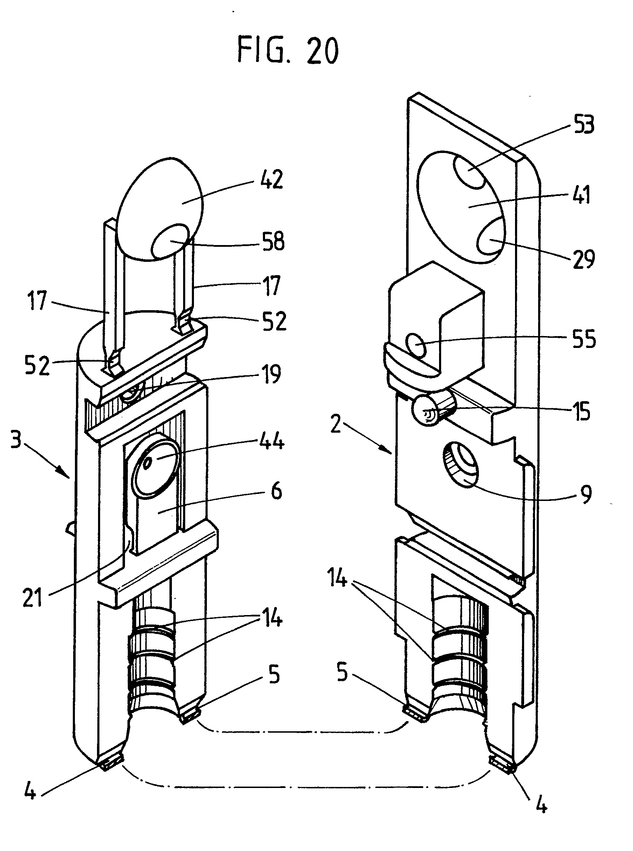

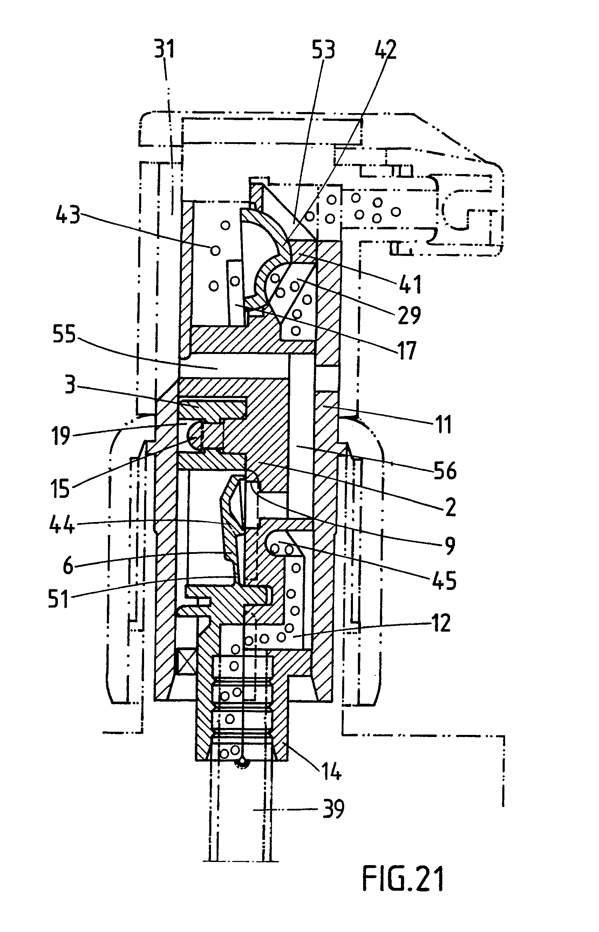

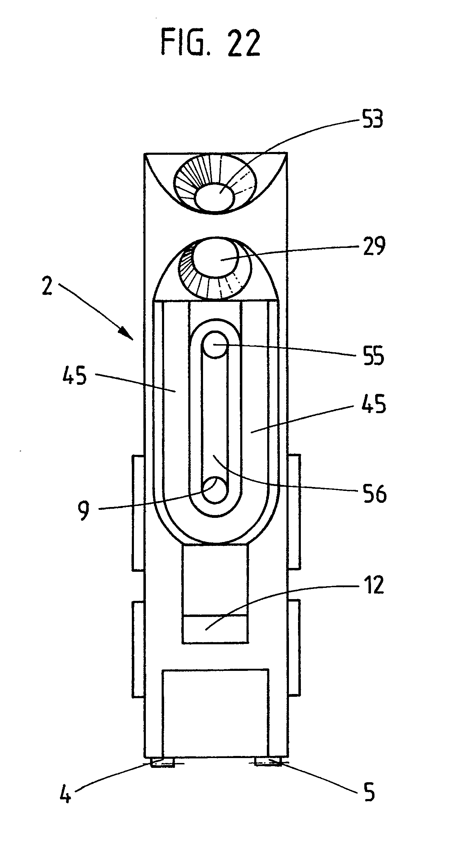

Eine vierte Ausführungsform des Ventilkörpers ist in den Fig. 17 - 22 dargestellt. Wie in Bezug auf die dritte Ausführungsform beschrieben weist auch diese Ausführungsform einen halbkugelförmigen Verschlußkopf 42 auf, der in einer Karlotte 41 einliegt und das Füllgutaustrittsventil ausbildet. Das Füllgut tritt durch den Strömungsweg 12 in einen sich teilenden Strömungsweg 45 aus, der zusammen von der Halsinnenwand und zwei parallellaufende Nutenausgebildet wird, wobei sich beide Wege vor der Kalotte 41 wieder vereinigen. Diese beiden parallellaufenden Füllgutwege 45 umschließen einen Luftkanal 56, der sich dem Sitz des Lufteintrittsventils anschließt und der in einen Querkanal 55 einmündet, welcher wiederum in einen der Spendekappe zugeordneten Luftströmungskanal einmündet ist.

Das Lufteintrittsventil wird von einem Verschlußglied 6 ausgebildet, wobei einer Verschlußzunge eine Verschlußklappe 44 angeformt ist, die auf einem Ventilsitz 9 aufliegt. Das Verschlußglied 6 ist mit einem Federgelenk 51 am Verschlußteil 3 verbunden. Sowohl Füllgutaustrittsventil als auch Lufteintrittsventil werden in der Trennebene T ausgebildet. Der Lufteintrittskanal kreuzt dabei zweimal die Trennebene, einmal unter Ausbildung des Ventilsitzes und noch einmal durch einen Querkanal 55 welcher mit der von einer Nut 56 gebildeten mit dem Strömungskanal 31 verbunden ist. Der Querkanal 55 tritt dabei durch einen von den Verschlußgliedzungen 17' gebildeten Freiraum durch. Auch bei dieser Version des Ventilkörpers bilden an der Ventilkörperoberfläche angeordnete Nuten in Zusammenwirkung mit der Innenwand 10 des Spendehalses 11 Nuten aus, in welchen Luft oder Füllgut transportiert wird.

Im übrigen treffen die allgemeinen bzw. nicht speziell wiederholten Ausführungen zu einer Ausführungsform auch bei den anderen Ausführungsformen zu, soweit sie nicht durch die jeweilige spezielle Beschreibung bzw. zeichnerische Darstellung deutlich unterschieden sind.

Die in der vorstehenden Beschreibung, der Zeichnung und den Ansprüchen offenbarten Merkmale der Erfindung können sowohl einzeln als auch in beliebiger Kombination für die Verwirklichung der Erfindung von Bedeutung sein. Alle offenbarten Merkmale sind erfindungswesentlich. In die Offenbarung der Anmeldung wird hiermit auch der Offenbarungsinhalt der zugehörigen Prioritätsunterlagen (Abschrift der Voranmeldung) vollinhaltlich mit einbezogen.

## Patentansprüche

1. Ventilkörper (1) für einen Spender, insbesondere einen Spender mit zusammendrückbarem und elastisch rückstellfähigem Behältnis und mit selbstschließenden Füllgutaustritts- und Lufteintrittsventil, gekennzeichnet durch zwei miteinander verbindbare, insbesondere rastverbindbare, eine sich in Ventilkörperlängsrichtung erstreckende Trennebene (T) ausbildende Ventilkörperteile (2, 3), nämlich ein Verschlußteil (3) und ein Spendeöffnungsteil (2), wobei das Füllgutaustrittsventil von einem Verschlußglied (17), das im Bereich der Trennebene (T) dem Verschlußteil (3) in Ventilkörperlängsrichtung federnd schwingbar angeformt ist zur verschließenden Auflage auf einem dem Spendeöffnungsteil (2) zugeordneten Ventilsitz (29, 41) gebildet ist.

2. Ventilkörper, insbesondere nach Anspruch 1, dadurch gekennzeichnet, daß Verschlußteil (3) und das Spendeöffnungsteil (2) einstückig miteinander ausgebildet sind.

3. Ventilkörper, insbesondere nach einem oder mehreren der vorhergehenden Ansprüche, gekennzeichnet durch ein einem Ventilkörperteil (2, 3) angeformtes Verschlußglied (6) zur verschließenden Auflage auf einen Ventilsitzes (9) des Lufteintrittsventils.

4. Ventilkörper, insbesondere nach einem oder mehreren der vorhergehenden Ansprüche, dadurch gekennzeichnet, daß der Ventilsitz (9) des Lufteintrittsventils von einem Ventilkörperteil ausgebildet wird, welches verschieden ist von dem, welchem das Verschlußglied (6) angeformt ist.

5. Ventilkörper, insbesondere nach einem oder mehreren der vorhergehenden Ansprüche, dadurch gekennzeichnet, daß die im wesentlichen eine halbkreisförmige Querschnittsfläche aufweisenden Ventilkörperteile (2, 3) einen im wesentlichen im Querschnitt kreisförmigen Ventilkörper (1) ausbilden.

6. Ventilkörper, insbesondere nach einem oder mehreren der vorhergehenden Ansprüche, dadurch gekennzeichnet, daß der Ventilkörper zur Einpassung in einem Spenderhals (11) ausgebildet ist, wobei nutenförmige Aussparungen (13, 31, 45) in der Ventilkörperaußenwand mit der Innenwand (10) des Spenderhalses (11) Kanäle ausbilden.

7. Ventilkörper, insbesondere nach einem oder mehreren der vorhergehenden Ansprüche, gekennzeichnet durch ein als federnde Zunge (6, 17) ausgebildetes Verschlußglied.

8. Ventilkörper, insbesondere nach einem oder mehreren der vorhergehenden Ansprüche, dadurch gekennzeichnet, daß sich die federnde Zunge (6) quer zur Ventilkörperlängsrichtung erstreckt.

9. Ventilkörper, insbesondere nach einem oder mehreren der vorhergehenden Ansprüche, gekennzeichnet durch eine als einer federnden Zunge endseitig angeformte Verschlußklappe (44) ausgebildetes Verschlußglied (6).

10. Ventilkörper, insbesondere nach einem oder mehreren der vorhergehenden Ansprüche, gekennzeichnet durch einen vom Verschlußglied (17) ausgeformten Noppen (18), zum Verschluß einer Ventilöffnung (29).

11. Ventilkörper, insbesondere nach einem oder mehreren der vorhergehenden Ansprüche, gekennzeichnet durch ein Verschlußglied, bei dem zwei parallel verlaufende, am Verschlußteil angeformte Zungen (17') einen im wesentlichen halbkugelförmigen Verschlußkopf tragen, und einen dazu formangepaßten, vom Spendeöffnungsteil ausgebildeten kalottenförmigen Ventilsitz (41).

12. Ventilkörper, insbesondere nach einem oder mehreren der vorhergehenden Ansprüche, dadurch gekennzeichnet, daß das Verschlußglied des Füllgutaustrittsventils einen zweiten Verschlußnoppen (25) ausbildet, zum Verschließen der Spendeöffnung (26) des Spenders.

13. Ventilkörper, insbesondere nach einem oder mehreren der vorhergehenden Ansprüche, dadurch gekennzeichnet, daß das Verschlußglied (6, 17) mit einer eingeprägten Vorspannung in den Verschlußzustand gespritzt ist.

14. Ventilkörper, insbesondere nach einem oder mehreren der vorhergehenden Ansprüche, dadurch gekennzeichnet, daß das Spendeöffnungsteil (2) und/oder das Verschlußteil (3) einendig einen Halterungssitz (14) für ein Saugrohr (39) ausbilden und daß der Halterungssitz (14) an den Strömungsweg (12) angeschlossen ist.

15. Ventilkörper (1), insbesondere nach einem oder mehreren der vorhergehenden Ansprüche, dadurch gekennzeichnet, daß eine Mittelachse des Halterungssitzes im wesentlichen parallel zu einer Trennebene (T) zwischen dem Verschlußteil (3) und dem Spendeöffnungsteil (2) verläuft.

16. Ventilkörper, insbesondere nach einem oder mehreren der vorhergehenden Ansprüche, gekennzeichnet durch ein mit einem als Materialverdünnung ausgestaltetes Federgelenk (51, 52) am Ventilkörperteil verbundenes Verschlußglied (6, 17).

17. Ventilkörper, insbesondere nach einem oder mehreren der vorhergehenden Ansprüche, gekennzeichnet durch eine zweite, die Spendeöffnung (53) bildende Öffnung in einem kalottenförmig gestalteten Ventilsitz (41).

18. Ventilkörper, insbesondere nach einem oder mehreren der vorhergehenden Ansprüche, gekennzeichnet durch eine die Spendeöffnung (53) zweiteilende Materialbrücke.

19. Ventilkörper, insbesondere nach einem oder mehreren der vorhergehenden Ansprüche, gekennzeichnet durch zumindest teilweise parallel verlaufende nutförmige Aussparungen (45, 13, 56) in der Ventilaußenwand, zur Ausbildung von Kanälen für den Füllgutfluß und den Luftfluß.

20. Ventilkörper, insbesondere nach einem oder mehreren der vorhergehenden Ansprüche, dadurch gekennzeichnet, daß die beiden Ventilkörperteile durch einen in Zapfenausnehmungen (19, 20) verrastenden Rastzapfen (15, 16) verbunden sind.

21. Ventilkörper, insbesondere nach einem oder mehreren der vorhergehenden Ansprüche, dadurch gekennzeichnet, daß die Ventilkörperteile (2, 3) mittels Filmscharniere (4, 5) verbunden sind.

22. Adapter für einen Ventilkörper, insbesondere nach einem oder mehreren der vorhergehenden Ansprüche, gekennzeichnet durch einen Adapterhals (48), in welchem der Ventilkörper (1) einsetzbar ist, wobei der Adapter (46) wiederum mit seinem Adapterhals (48) in einen Hals (47) eines Behältnisses einsetzbar ist, wobei ein dem Adapterhals (48) ventilkörpereinsteckseitig angeformter Bund (63) in dem oberen Bereich des Halses (47) einen Formschluß bildet und ein dem Bund (63) angeformter Kragen (60) auf der Randkante des Halses (47) aufliegt und dem Kragen zugeordnete Luftschlitze (49) in den Freiraum zwischen Adapterhals (48) und Behältnishals (47) münden.

23. Adapter für einen Ventilkörper, insbesondere einen Ventilkörper nach einem oder mehreren der vorhergehenden Ansprüche, zum Zusammenschluß des Ventilkörpers (1) mit einem Kartuschenbeutel (28) und zur haltenden Aufnahme des Kartuschenbeutels (28) in einem Behältnis (24) mit einem Behältnishals (47), dadurch gekennzeichnet, daß der Adapter (46) Zentriermittel (60, 63) aufweist, zur Zentrierung in Bezug auf den Behältnishals (47), unter Belassung von axialen Luftkanälen (49) zwischen dem Behältnishals (47) und dem Adapterhals (48).

24. Adapter für einen Ventilköper, insbesondere nach einem oder mehreren der vorhergehenden Ansprüche, dadurch gekennzeichnet, daß der Adapter (46) einen Kragen (60) ausbildet, zur Auflage auf den Behältnisrand.

25. Adapter für einen Ventilkörper, insbesondere nach einem oder mehreren der vorhergehenden Ansprüche, dadurch gekennzeichnet, daß der Adapter mit seinem Kragen (60) in einer Kappe (11) zentrierbar ist.

26. Adapter, insbesondere nach einem oder mehreren der vorhergehenden Ansprüche, gekennzeichnet durch eine von einem querschnittsengeren Bereich des Adapterhalses (48) gebildete Einsatzpassung (62) zur Halterung des Ventilkörpers (1).

27. Kartusche, insbesondere für einen Spender mit zusammendrückbarem und elastisch rückstellfähigem Behältnis, mit einem kollabierfähigen Kartuschenbeutel (28), dadurch gekennzeichnet, daß der Kartuschenbeutel (28) in einem Kartuschenbehälter aufgenommen ist und daß in einem Deckelbereich und einem Bodenbereich der Einheit Kartuschenbehälter/Kartuschenbeutel (28) eine oder mehrere (Lüftungs-)Durchtrittsöffnungen ausgebildet sind.

28. Kartusche, insbesondere nach Anspruch 23, dadurch gekennzeichnet, daß die obere Lüftungsöffnung in einem oberen, im wesentlichen starren Abschlußteil des Kartuschenbeutels (28) ausgebildet ist.

FIG.1

FIG.2

FIG.4

FIG.3

FIG.5a

FIG.5

FIG.6a

FIG.6

EP 0 444 313 A2

FIG.7

FIG.8

# FIG.9

FIG.10a

FIG.10b

FIG.10c

FIG.11

FIG.12

FIG.13

16

# FIG.14

FIG.15

FIG.16

EP 0 444 313 A2

FIG.17    FIG.18

XVIII

42
58
17
17'
52
19
44
6
3
4  5  14
2
15
55
29
41
53

XVIII

FIG.18

19
42
58
17'
52
44
6
21  51

FIG.19

14  T

12
21
44
56
45
55
41
42
53

12
5
14
5
12
45
9
56
15
19  55
41
53

# FIG. 20

EP 0 444 313 A2

FIG.21

21

# FIG. 22